# EUROPEAN PATENT SPECIFICATION

(11) **EP 3 060 498 B1**
(45) Date of publication and mention of the grant of the patent: **14.06.2017**
(21) Application number: 14784476.5
(22) Date of filing: 16.10.2014
(51) Int. Cl.: B65D 85/816

(54) **CAPSULE FOR PREPARING A BEVERAGE SUCH AS COFFEE AND THE LIKE**
KAPSEL ZUR ZUBEREITUNG EINES GETRÄNKS WIE KAFFEE UND DERGLEICHEN
CAPSULE POUR PRÉPARER UNE BOISSON TELLE QUE DU CAFÉ ET SIMILAIRE

(30) Priority: 22.10.2013 EP 13189636
(43) Date of publication of application: 31.08.2016
(73) Proprietor: Nestec S.A., 1800 Vevey (CH)
(72) Inventor: GERBAULET, Arnaud, F-25160 Oye et Pallet (FR); NORDQVIST, David, CH-1007 Lausanne (CH); ABEGGLEN, Daniel, CH-1439 Rances (CH); PELLEGRINI, Stéphane, F-25160 Montperreux (FR)
(74) Representative: Borne, Patrice Daniel
(86) International application number: PCT/EP2014/072195
(87) International publication number: WO 2015/059022

(56) References cited:
- EP-A1- 0 524 464
- WO-A1-2012/079959
- US-A1- 2011 247 975

## Description

### Field of the invention:

The present invention relates to a capsule for use in a beverage preparation device, such as a coffee machine and the like, to prepare a beverage such as coffee. The invention more particularly relates to a capsule comprising paper material. The capsule of the invention is more particularly focused to protect beverage ingredients which are sensitive to oxidation such as roast and ground coffee and the like.

### Background:

In general, food containers made of paper laminate are known.

A beverage capsule for preparing a beverage in a coffee machine formed of paper-based material is also known. A paper-based capsule provides a potentially reduced environmental impact compared to capsule made of plastic materials. They are also lightweight. Their use is so advantageous on industrial and commercial point of views.

EP0524464A1 relates to a closed or open flexible capsule which can comprise a multi-layer of aluminium/paper/plastic in combination with a rigidifying element.

WO2009050540A1 relates to a capsule for the preparation of a beverage such as coffee constituted of biodegradable material in particular, a composition comprising starch, fibres, proteins, lipids and at least one biodegradable resin.

EP2218653A1 relates to a package with a fibrous layer fixed in a wall of the shell and a closure membrane connected to the shell by material engagement. A marking can be arranged at or in the package or fixedly arranged with the shell or the closure membrane where the shell, the fibrous layer and the closure membrane are made of biologically degradable material. The closure membrane includes a laminate which is jointed to two metalized bio-plastic films in an air free- manner.

WO2009053811A2 relates to a container arranged for containing a dosed quantity of a solid product for extracting a beverage; the container having walls made of a material that is impermeable to water and oxygen and may be degradable and/or an edible film.

WO2010137956A1 relates to a capsule for containing beverage ingredients, comprising a sealing member for achieving a sealing effect with a beverage production device wherein an external surface of the sealing member comprises fibrous and/or paper-like material to achieve the sealing effect against sealing surfaces of the device during closure.

WO2010137957A1 relates to a capsule with a body and a flange comprising a wall including material which upon being wetted expands.

EP2573008A1 relates to a capsule with a paper body and cover or sealing film; the peripheral rim has a greater rigidity than the tray-like body and can be formed as a ring.

It is advantageous to utilize paper or similar biodegradable materials as packaging material for a single-use capsule for preparing a beverage in a beverage production device. However, a problem is due to the deformation properties of the formed sheet of material, either by stamping or folding, which do not allow forming a sufficiently smooth surface of the flange once formed. In particular, folds or creases appear on the flange. These folds or creases do not allow a tight sealing of the capsule, in particular, between the flange of the capsule and the cover which seals thereon. When the sealing is not perfect, rapid oxidation of certain beverage ingredients (e.g., roast and ground coffee) may occur and the quality of the beverage is adversely affected.

Furthermore, the paper-based surface is too irregular to receive a readable identification marking such as an optical barcode or equivalent such as described in WO2011141532A1.

Additionally, the paper-based surface is usually insufficiently rigid for setting a pressure in combination with a pressurizing ring-shaped counterpart of the device to control the coffee extraction, such as described in WO2010066705A1.

Therefore, there is a need for inventing a paper containing capsule offering enough mechanical properties to be used in a beverage preparation device but which also provides a perfect sealing with the cover so that a reduced risk of oxidation is encountered.

### Summary of the invention:

The invention is defined in its generality in the appended claims which form part of the present description.

In particular, the invention relates to a capsule for the preparation of a beverage in a beverage preparation device comprising a cup-like body, a sealing cover for closing the cup-like body; a flange for the cover to seal thereon; the cup-like body being formed of paper-based material comprising at least one gas barrier layer with a cavity wall containing beverage ingredients; wherein the flange is sealingly attached to body and the flange is formed of a first polymer and a second polymer; the second polymer being a gas barrier layer overlapping with the cup-like body.

In particular, the gas barrier layer made of second polymer preferably overlaps with the gas barrier layer of the cup-like shaped body.

As a result, the capsule of the invention is lightweight due to paper but has also the ability to preserve the beverage ingredients against oxidation for an extensive period of time. The sealing between the parts of the capsule is improved thereby resulting in lower risk of gas leakage. The capsule remains sufficiently rigid to withstand the mechanical and hydraulic pressure in the beverage production device.

The term "gas barrier" is here used for designating the property to significantly reduce the transmission of gas, in particular, oxygen through the material layer. The oxygen transmission can be defined by the amount of oxygen that is transmitted per surface area, time and pressure, at a certain temperature and a certain relative humidity. The layer can be regarded as gas barrier when it provides an oxygen transmission rate below 10 cc.20µm/m².day.atm, more preferably below 1 cc.20µm/m².day.atm according to ISO14663-2 standard (65% RH).

Preferably, the gas barrier layer is embedded in the first polymer. As a result, the gas barrier integrity is maintained and is protected from the external aggressions in particular against moisture.

More specifically, the flange comprises a first sealing portion for the attachment of the sealing cover and a second sealing portion for the attachment of the cup-shaped body and wherein the gas barrier layer extends from the first portion to the second portion. Therefore, the continuity of the barrier to gas can be maintained from the two sealing areas of the flange with its respective parts, i.e., the sealing cover and body. This results in an improved gas impermeability of the capsule.

The flange can be produced by co-injection of the first and second materials. However, alternative methods are possible such as co-lamination and thermoforming, or separate injections and assembling by welding.

In a first mode, the first and second sealing portions are radially distant one another at the flange. The distance has the advantage to be able to more easily and reliably seal the sealing cover to the flange of the capsule. In particular, the risk of deteriorating the sealing of the flange with the cup-shaped body when sealing the cover on the flange is diminished.

In particular, the flange may comprise a first outwardly projecting annular member comprising the first sealing portion and a second tubular or trunconical member comprising the second sealing portion. The second sealing portion is preferably sealed to a complementarily shaped tubular or trunconical portion of the cup-shaped body.

In one mode, the second sealing portion is sealed to the outside surface of the tubular or trunconical portion. In an alternative mode, the second sealing portion is sealed to the inside surface of the tubular or conical portion.

In an alternative mode, the first and second portions overlap in the radial direction one another. In particular, the flange may comprise a relatively flat or stepped annular member. In this case, the paper-based cup-shaped body comprises an outwardly projecting flange portion which is sealed to the annular member of the flange.

The second polymer is chosen for its gas barrier properties essentially. The second polymer for the flange is preferably selected amongst the group consisting of ethylene vinyl alcohol copolymer (such as EVOH), PVDC, Polyamide (such as PA6, PA66, or PA-MXD6), polyvinyl alcohol (PVA or PVOH or PVAI), polyethylene naphtalate (PEN), polybutylene napthalate (PBN), polyethylene terephthalate (PTFE), and combinations thereof. The barrier layer may have a thickness comprised between 2 and 30 µm, more preferably between 5 and 20 µm.

The first polymer does not need to provide gas barrier properties but more mechanical properties and moisture resistance. The first polymer is also chosen for its good ability to be moulded, preferably by injection-moulding and its compatibility to co-injection and/or adhesion to the second embodiment. The first polymer is preferably selected amongst the group consisting of polyamide (PA), polyethylene (PE), polypropylene (PP), polyethylene terephthalate (PET), ethylene vinyl alcohol (EVOH), polyvinyl alcohol (PVOH or PVA), polyvinylidene fluoride (PVDF), polyvinylidene chloride (PVDC), polybutylene napthalate (PBN), polyethylene naphtalate (PEN), polyoximethylene (POM), polyphenylene sulfide (PPS), fluorothermoplastic material and combinations thereof.

The flange could also combine other specific polymer layers such as polymers which are resistant to chemicals, for example, polyvinylidene fluoride (PVDF), polyamide (PA), polyvinylidene chloride (PVDC) or combinations thereof.

The paper-based material of the cup-shaped body comprises at least one sheet of material selected amongst the group of: paper, pulp of cellulose, natural fibres and combinations thereof. The material preferably comprises at least 50% in weight of paper. Preferably, the paper-based material can be obtained by different technologies such as lamination and/or forming and can be combined with layers of other functional materials.

Preferably, the paper-based sheet is preferably a laminate of paper and thermo-formable polymer layer(s).

The paper-based sheet of the body comprises at least one oxygen barrier layer selected amongst the group of ethylene vinyl alcohol copolymer (EVOH), PVDC Polyamide (such as PA6 or PA66, or even MXD6), PVA, PVOH, PEN/PBN, PTFE and combinations thereof.

The barrier layer may have a thickness comprised between 5-30 µm, more preferably between 8-20 µm. A metalized film can be for instance a PET layer coated with thin (e.g. 1 µm) metal layer.

The sealing cover is also preferably gas transfer resistant or impermeable. For this, the sealing cover is preferably a laminate of polymer(s) or paper-polymer(s). More preferably, the sealing cover comprises at least one gas barrier layer selected amongst the group of EVOH, PVDC, Polyamide (such as PA6, PA66, or PA-MXD6), PVA, PVOH, PEN/PBN, PTFE, and combinations thereof.

The invention further relates to a method for producing a capsule comprising as cup-like body and a flange as aforementioned, comprising, at least:
a. Forming the paper-based cup-like body,
b. Placing the formed paper-based cup-like body in a co-injection moulding apparatus,
c. Co-injecting first and second polymers in molten state to form, after solidifying, the flange with the gas barrier layer of second polymer overlapping with the cup-like body.

The method further comprises filling ingredients in the cavity of the body and subsequently sealing the sealing cover onto the flange. The sealing method can be heat or ultrasonic welding or gluing.

The forming of the paper-based material may be obtained by heat deformation of a flat sheet or laminate of paper-based material or by pulp moulding and subsequent coating of gas barrier polymer.

### Brief description of the figures:

Figure 1 represents in side view a beverage capsule for use in a beverage production device such as a portioned coffee machine;
Figure 2 is a cross sectional view of a detail of the capsule of figure 1, along plan A passing through the central axis of the capsule, and in particular focusing on the attachment of the flange to respectively the body and sealing cover of the capsule;
Figure 3 is a cross sectional view of a detail for a second embodiment of the capsule of figure 1;
Figure 4 is a cross sectional view of a detail for a third embodiment of the capsule of figure 1;
Figure 5 is a cross sectional view of a detail for a fourth embodiment of the capsule of figure 1;
Figure 6 shows a general view of a co-injection moulding apparatus for producing the capsule of the invention, in particular, for co-injecting the flange to the cup-shaped body;
Figure 7 shows the co-injection moulding apparatus of figure 5;
Figure 8a to 8c show successive operations of the co-injection moulding method in the apparatus of figures 3 and 4;
Figure 9 represent a block diagram of the main operations for the production of the capsule of the invention according to a preferential method.

### Detailed description of preferred modes:

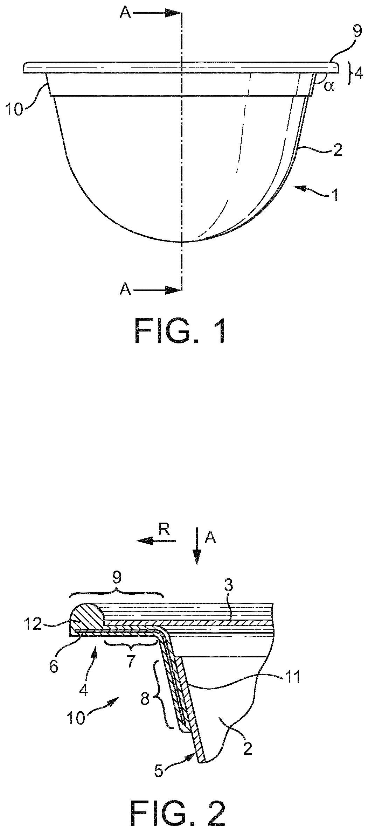

In reference to figures 1 and 2, the capsule 1 of the invention comprises a cup-like shaped body 2, a sealing cover 3 and a flange 4. The sealing cover is sealed onto the flange such as by welding or gluing. The body is generally truncated or bowl shaped. It is generally (but not necessarily) symmetrical around a central axis of rotation. It is internally concave for forming a cavity, demarcated by a cavity wall 5, for holding beverage ingredients. The capsule is particularly suitable to hold ingredients which are normally sensitive to oxygen, in a closed and gas protected environment. The ingredients may be coffee, e.g., roast and ground and/or soluble powder, or other ingredients adapted for the preparation of a beverage or food in combination with a diluent such as water which is fed in the container by injection means of the beverage production device. Oxygen is preferably removed from the cavity before sealing of the cover onto the flange. For this, the cavity can be saturated with a protective gas such as nitrogen and/or carbon dioxide.

In the first mode of figures 1 and 2, the flange 4 forms an integral element comprising a first outwardly projecting annular member 9 and a second trunconical member 10. The flange thereby forms a general shape of inverted "L" with the two members forming an angle α that may vary from about 90 to 135 degrees.

Moreover, the flange is arranged for delimiting a first sealing portion 7 for the sealing cover to be attached thereon. The flange also comprises a second sealing portion 8 for a portion 11 of the cup-shaped body to be sealed thereon. The first sealing portion 7 and the second sealing portion 8 are respectively supported by the first member 9 and second member 10 of the flange. As a result, the body and sealing cover can be attached to the flange along two portions which are distant one another and situated in relatively distinct and non-parallel direction planes. In particular, when the sealing cover is sealed onto the flange, the integrity of the attachment of the body to the flange is well preserved such as, for example, it is sufficiently isolated from heat or ultrasonic waves coming from the sealing portion 7. In this first embodiment, the second sealing portion 8 of the flange is also sealed to the outside surface of the trunconical portion 11 of the paper-based cup shaped body.

Importantly, the flange is formed of at least two different polymers; a first polymer which provides the mechanical resistance and a second one which is a gas barrier polymer formed as at least one layer 6 embedded inside the first polymer. The layer 6 extends along the flange at least from the first sealing portion 7 to the second sealing portion 8. The layer preferably extends to overlap with the surfaces of the sealing portions 7, 8. As seen in figure 2, the layer extends radially in direction R beyond the first sealing portion 7. The layer also extends in axial direction A to overlap with the portion 11. The layer may not necessarily be touching the sealing portions but should at least extend in parallel or adjacent to the sealing portions with a minimal thickness of the first polymer in-between. More preferably, the gas barrier layer is also isolated from the external environment for preventing it from being damaged by moisture and/or mechanically. For this, the gas barrier is preferably embedded in the first polymer. The first polymer is preferably chosen for providing sufficient moisture tightness so that the gas barrier is kept out of contact with the environmental moisture.

The cup-shaped body 2 is essentially formed of paper material. The paper material can be at least one thermoformed layer of paper or natural fibres or moulded pulp. In order for the material to be substantially gas impermeable, the paper material is preferably coated with at least one layer of gas barrier. The gas barrier may be coated on the internal side of the cavity wall 5 or on the external side of the cavity wall or both. A (preferably thin) additional layer of decorative, protective and/or sealing polymer can be provided on the gas barrier layer, as well as, on the opposite side to protect the paper layer from moisture.

The sealing material is substantially also impermeable to gas. The sealing cover can be a laminate comprising paper and polymer including a gas barrier layer that can be a polymer or metal. For instance, the sealing cover is a PP-EVOH-PET laminate.

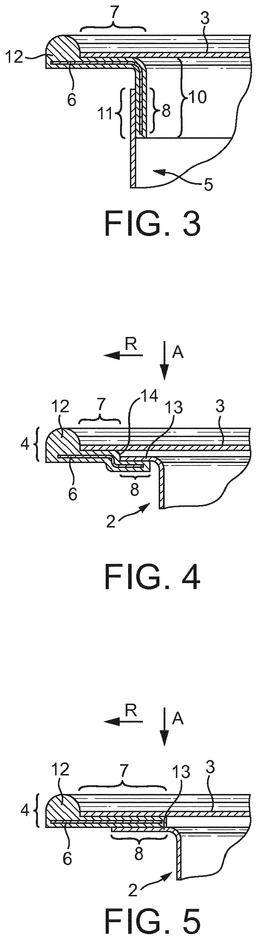

Figure 3 represents a second embodiment of the capsule of the invention in which the second sealing portion 8 of the flange is sealed to the inside surface of the trunconical portion 11 of the paper-based cup shaped body. Otherwise, the arrangement of the capsule is the same as the one described in the first embodiment.

Figure 4 represents a third embodiment of the capsule of the invention in which the cup-shaped body comprises an outwardly projecting flange portion 13. The sealing cover 3 is sealed to a first (outer) sealing portion 7 of the flange while the flange portion 13 of the body is sealed to a second (inner) sealing portion 8 of the flange 4. The gas barrier layer 6 of the flange, preferably embedded in shell 12, extends in a manner to overlap the two sealing portions 7, 8. The flange 4 is further moulded with a step 14 providing a short distance between the sealing cover 3 and the paper-based body. The two sealing portions 7, 8 are thereby positioned substantially adjacent one another in the radial direction **R**, without significant interruption except in axial direction **A**, by the short gap formed by the step 14. The resulting capsule is so also very much protected against oxygen intrusion and/or protective gas losses for an extensive period of time.

Figure 5 represents a fourth embodiment of the capsule of the invention in which the the cup-shaped body still comprises an outwardly projecting flange portion 13. In this mode, the flange portion 13 is sealingly attached to the outside surface of the second sealing portion 8 of the flange 4. This mode provides an overlapping (in radial direction **R)** of the first sealing portion 7 with the sealing cover 3 and of the second sealing portion 8 with cup-shaped body. This arrangement may be advantageous when considering a simultaneous sealing, e.g. by heat welding, of the sealing membrane and cup-shaped body to the flange. Also, the flange can be given a reduced radial dimension and the gas barrier layer 6 may also be sized shorter while still extending along the two sealing portions 7, 8 in the radial direction.

The following of the description describes a preferred way of producing the capsule of the invention using a specific co-injecting moulding apparatus. The example is given for the first mode of the capsule of the invention but it is equally applicable to the second, third and fourth modes.

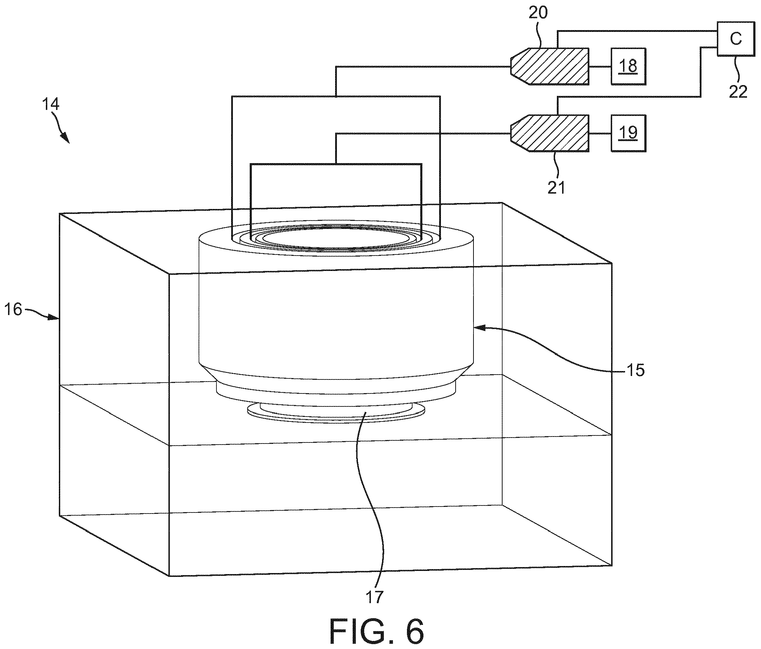

Referring to Figure 6, the co-injecting moulding apparatus 14 is represented. The apparatus comprises a hot runner assembly 15 arranged for injecting molten materials coming from two different sources of polymers in a moulding assembly 16 defining a ring-shaped moulding cavity 17. Polymer materials can be stored in reservoirs 18, 19 such as in the form granules or pellets. The polymer materials are melted and dosed in two separate dosing assemblies 20, 21 such as heated extruders, which are arranged to supply separate channels of the hot runner assembly. The dosing and melting assemblies can be otherwise such as be constituted by dosing pistons fed by melting devices. The dosing and melting assemblies are controlled by a central control unit 22 configured for properly feeding the hot runner assembly 16 with the appropriate molten materials in appropriate amounts and in a predetermined order or sequence to achieve the production of a multi-layered article. It should be noted that the apparatus may comprise manifolds (not represented) to feed several hot runner assemblies with molten materials dosed from one dosing assembly.

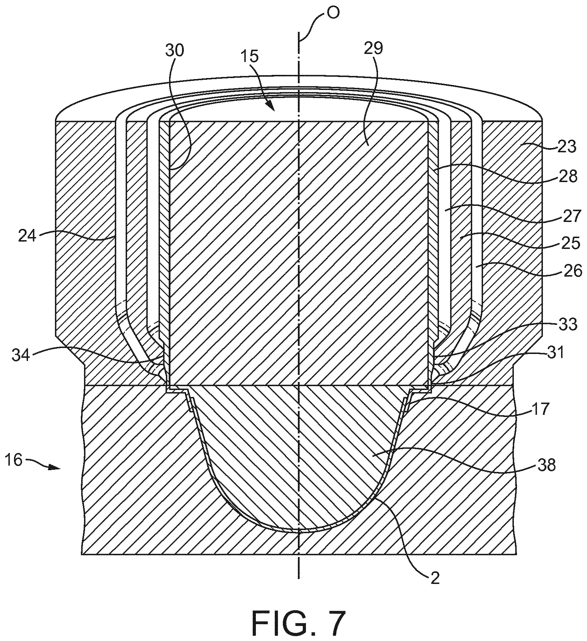

In figure 7, is shown the hot runner assembly 15 in conjunction with the moulding assembly 16. The hot runner assembly comprises a body 23, generally delimiting an inner surface or bore 24 having an hollow generally symmetrical shape. The inner surface or bore 24 is symmetrically hollow relative to a central axis O. Inside the bore of the body is arranged a flow splitter 25. A gap is provided between the flow splitter and the inner surface of the body to form a first flow channel 26. On the other side of the flow splitter is provided a second flow channel 27 which is delimited by the inner surface of the flow splitter and a valve member 28. The valve member is also generally of annular form and is mounted concentrically around a core member 29. The core member 29 has a smooth annular outer surface 30 complementary to a smooth inner surface of the valve member 28 in such a way that the valve member can move in the axial direction of axis O for selectively opening and closing the flow channels.

The body 23 and inner core member 29 further delimit a nozzle gate 31 placed at the exit of the hot runner assembly for communicating directly with the moulding cavity 17 of the mould assembly. The cavity is shaped in a closed loop fashion with shape of the flange 4 to be injected. The nozzle gate 31 is also given the shape of an annulus or similar closed loop shape. Further inside of the bore is placed an inner gate 33 delimited by a distal end 34 of the flow splitter and by the inner core member 29. The inner gate as well is given an annulus or closed loop to be able to deliver a second molten material in a closed loop flow configuration.

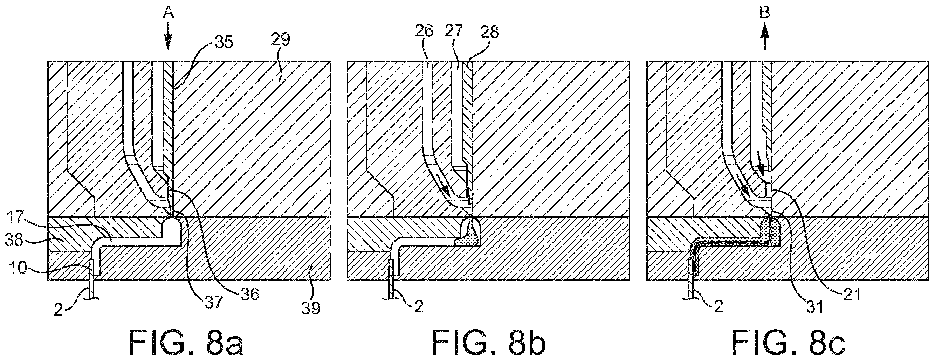

The valve member 28 has three positions: closed, partially open and fully open (respectively represented in figures 8a, 8b and 8c). As can be seen in figure 8a, the valve member comprises successive annular portions 35, 36, 37 step wisely arranged with reduced cross sections so forming a staggered configuration. The section of free end portion 37 is complementary to the nozzle gate 31 so that it can close it when valve member 28 is moved axially in direction **A** of the nozzle gate as illustrated in figure 8a. The section of the intermediate portion 36 is complementary to the inner gate 21 that is closed when the valve member is placed in the partial opening position as illustrated in figure 8b. In such position, the first flow channel 26 remains open for enabling the first molten material alone to flow in the cavity. When the valve member is sufficiently moved in the opening direction **B** opposite to the nozzle gate or cavity, the intermediate portion 36, is disengaged from the inner gate 21 and the two gates 31, 21 are so arranged in open configuration for enabling the two molten materials to be supplied from the first and second channels 26, 27 respectively, then combined between the two gates and pushed to the cavity as shown in figure 8c. The activation of the valve member is controlled by the central control unit 22 in the different positions (Figures 8a, 8b, 8c). The valve member can be driven pneumatically for instance or otherwise, such as hydraulically or by any other suitable means, including electrical and electromagnetic motors (e.g., solenoids).

The hot runner assembly 15 is arranged to engage with the moulding assembly 16 during the injection operations. The mould assembly may comprise a first mould part or core part 38 and a second mould part or outer mould part 39 assembled in closure to delimit the moulding cavity 17. The first mould part 38 also engages the outer surface of the inner core 29 in a tight manner to prevent molten material from flowing inwardly between the two assemblies. The first and second mould parts are arranged to receive and firmly hold the cup-shaped body 2 in such a manner that the trunconical portion 10 of it is exposed in a position adjacent to the cavity 17.

In a possible variant, the injection gate 31 is positioned tangentially (rather than axially) to the direction of the mould opening. The annular injection gate can be so positioned on the side of the cavity of the flange. The advantage is that the possible wires of polymers after injection, in particular, at the external and internal edge of the gate are eliminated.

The method of the invention for producing the article 30 of figures 4 and 5 can be described as follows in relation to figures 8a to 8c.

In a first step, first molten material is injected in the cavity 17 by placing the valve member 28 in the first open (intermediate) position or partially open position (figure 8b). In this position, the second inner flow channel 27 is closed and the first outer flow channel 26 is open. The control unit controls the position of the valve and controls the first dosing device to dose and push first material through the hot runner assembly into the moulding cavity.

In a second step (figure 8c), first and second molten materials are co-injected in the cavity 17. In this position, the valve member is placed in a second (fully) open position. In this step, the second molten material is supplied in the cavity as an inner layer (i.e., corresponding to layer 6 of the flange) positioned between an outer embedding layer of the first molten material (i.e., corresponding to shell 12 of the flange). In this step, the control unit controls the position of the valve and the activation of the two dosing members. Optionally, the injection step may be ended by returning the valve member 28 into the first open (intermediate) position of figure 8b to inject a small amount of the first molten material. This step will ensures that the inner layer of second molten material is fully encased in the layers of the first molten material. The control unit then moves the valve member in the closing direction A to close the nozzle gate 31 (figure 8a). As a result of the co-injection in cavity, the outer layer also creates a sealing (or bond) with the free portion 10 of the cup-shaped body.

After injection, the co-injected flange 4 is allowed to cool down in the moulding cavity until it solidies. Then, the cavity is open for removing the flange-body assembly by moving the moulding parts 38, 39 and hot runner assembly 15 apart. In general, depending on the complexity of the flange to be produced, the injection time is in the order of a few seconds (e.g., 2-5 seconds) and the total cycle time is in the order of 7-20 seconds.

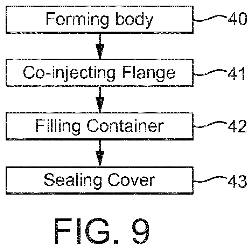

Figure 9 illustrates the general operations of the method for producing the capsule of the invention. In a first operation 40, the paper-based body 2 is formed separately. Forming can be obtained by different technologies. For example, the laminate or blank of paper/polymer is thermoformed to the three-dimensional cup shape. Alternatively, the body is obtained by pulp-moulding of cellulose fibres and subsequent coating of a gas barrier layer and optionally other polymer(s) such as sealing layers. In a second operation 41, the flange 4 is obtained by co-injection with its embedded gas barrier layer. During this operation, it is advantageous to seal the formed body and the flange according to the method and apparatus as previously described. However, the sealing operation of the flange and body could be performed after co-injection of the flange such as by gluing, heat sealing or ultrasonic sealing. In the third operation 42, the container resulting from these operations, is filled with beverage ingredients (e.g., roast and ground coffee). This operation is known 'per se'. It can be carried out under vacuum or inert gas to remove oxygen from the cavity of the container. In the fourth operation 43, the sealing cover is sealed onto the flange. Again, this operation can be carried out under vacuum or inert gas conditions to maintain oxygen level inside the capsule as low as possible.

## Claims

1. Capsule (1) for the preparation of a beverage in a beverage preparation device comprising a cup-like body (2), a sealing cover (3) for closing the cup-like body; a flange (4) for the cover to seal thereon; the cup-like body comprising a cavity wall (5) containing beverage ingredients and the cup-like based body being formed of paper-based material comprising at least one gas barrier layer; wherein the flange (4) is sealingly attached to the body;
said capsule being **characterized in that**
the flange is formed of a first polymer and a second polymer; the second polymer being a gas barrier layer (6) overlapping with the cup-like body (2).

2. Capsule according to claim 1, wherein the gas barrier layer (6) made of said second polymer is embedded in the first moulded polymer forming a shell (12).

3. Capsule according to claims 1 or 2, wherein the flange (4) comprises a first sealing portion (7) for the attachment of the sealing cover (3) and a second sealing portion (8) for the attachment of the cup-shaped body and wherein the gas barrier layer extends from the first portion (7) to the second portion (8).

4. Capsule according to claim 3, wherein the first and second sealing portions (7, 8) are radially and/or axially distant one another at the flange.

5. Capsule according to claim 4, wherein the flange (4) comprises a first outwardly projecting annular member (9) comprising the first sealing portion (7) and a second tubular or trunconical member (10) comprising the second sealing portion (8).

6. Capsule according to claim 5, wherein the second sealing portion (8) is sealed to a complementarily shaped tubular or trunconical portion (11) of the cup-shaped body.

7. Capsule according to claim 3, wherein the first and second portions overlap in the radial direction one another.

8. Capsule according to claim 7, wherein the flange (4) comprises a relatively flat or stepped annular member (9).

9. Capsule according to any of the preceding claims, wherein the second polymer is selected amongst the group consisting of EVOH, PVDC Polyamide, PVA, PVOH, PEN/PBN, PTFE and combinations thereof.

10. Capsule according to any of the preceding claims, wherein the first polymer is selected amongst the group consisting of polyamide (PA), polyethylene (PE), polypropylene (PP), polyethylene terephthalate (PET), ethylene vinyl alcohol (EVOH), polyvinylic alcohol (PVOH or PVA), polyvinylidene fluoride (PVDF), polyvinylidene chloride (PVDC), polybutylene napthalate (PBN), polyethylene naphtalate (PEN), polyoximethylene (POM), polyphenylene sulfide (PPS), fluorothermoplastic material and combinations thereof.

11. Capsule according to any of the preceding claims, wherein the paper-based material comprises at least one sheet of material selected amongst the group consisting of paper, cellulose, natural fibres and combinations thereof.

12. Capsule according to any of the preceding claims, wherein the paper-based material comprises at least one oxygen barrier layer selected amongst the group of EVOH, PVDC, Polyamide, PVA, PVOH, PEN, PBN, PTFE, and combinations thereof.

13. Capsule according to any of the preceding claims, wherein the sealing cover is a laminate of polymer(s) or paper-polymer(s) comprising at least one gas barrier layer selected amongst the group of EVOH, PVDC, Polyoamide, PVA, PVOH, PEN/PBN, PTFE, and combinations thereof.

14. Method for producing a capsule (1) according to any of the preceding claims comprising:
a. Forming the paper-based cup-like body (2),
b. Placing the formed paper-based cup-like body (2) in a co-injection moulding apparatus (14),
c. Co-injecting first and second polymers in molten state to form, after solidifying, the flange (4) with the layer (6) of second polymer overlapping with the cup-like body (2).

15. Method according to claim 14, wherein it further comprises filling ingredients in the cavity of the body and sealing the sealing cover (3) onto the flange.

## Patentansprüche

1. Kapsel (1) zur Zubereitung eines Getränks in einer Getränkezubereitungsvorrichtung, umfassend einen becherartigen Körper (2), eine abdichtende Abdeckung (3) zum Schließen des becherartigen Körpers; einen Flansch (4) zum Ankleben der Abdeckung daran; wobei der becherartige Körper eine Hohlraumwand (5) umfasst, die Getränkeinhaltsstoffe enthält, und der becherartig basierte Körper aus Material auf Papierbasis gebildet ist, das wenigstens eine Gasbarriereschicht umfasst; wobei der Flansch (4) abdichtend am Körper angebracht ist; wobei die Kapsel **dadurch gekennzeichnet ist, dass** der Flansch aus einem ersten Polymer und einem zweiten Polymer gebildet ist; wobei das zweite Polymer eine Gasbarriereschicht (6) ist, die den becherartigen Körper (2) überlagert.

2. Kapsel nach Anspruch 1, wobei die Gasbarriereschicht (6) aus dem zweiten Polymer in dem ersten, geformten Polymer eingebettet ist und einen Mantel (12) bildet.

3. Kapsel nach den Ansprüchen 1 oder 2, wobei der Flansch (4) einen ersten Dichtungsabschnitt (7) zum Anbringen der abdichtenden Abdeckung (3) und einen zweiten Dichtungsabschnitt (8) zum Anbringen des becherförmigen Körpers umfasst, und wobei sich die Gasbarriereschicht vom ersten Abschnitt (7) zum zweiten Abschnitt (8) erstreckt.

4. Kapsel nach Anspruch 3, wobei der erste und der zweite Dichtungsabschnitt (7, 8) am Flansch radial und/oder axial voneinander beabstandet sind.

5. Kapsel nach Anspruch 4, wobei der Flansch (4) ein erstes, nach außen vorspringendes, ringförmiges Element (9), das den ersten Dichtungsabschnitt (7) umfasst, und ein zweites, rohrförmiges oder kegelstumpfförmiges Element (10) umfasst, das den zweiten Dichtungsabschnitt (8) umfasst.

6. Kapsel nach Anspruch 5, wobei der zweite Dichtungsabschnitt (8) an einen komplementär geformten, rohrförmigen oder kegelstumpfförmigen Abschnitt (11) des becherförmigen Körpers geklebt ist.

7. Kapsel nach Anspruch 3, wobei der erste und zweite Abschnitt einander in radialer Richtung überlagern.

8. Kapsel nach Anspruch 7, wobei der Flansch (4) ein relativ flaches oder gestuftes, ringförmiges Element (9) umfasst.

9. Kapsel nach einem der vorstehenden Ansprüche, wobei das zweite Polymer ausgewählt ist aus der Gruppe bestehend aus EVOH, PVDC-Polyamid, PVA, PVOH, PEN/PBN, PTFE und Kombinationen davon.

10. Kapsel nach einem der vorstehenden Ansprüche, wobei das erste Polymer ausgewählt ist aus der Gruppe bestehend aus Polyamid (PA), Polyethylen (PE), Polypropylen (PP), Polyethylenterephthalat (PET), Ethylenvinylalkohol (EVOH), Polyvinylalkohol (PVOH oder PVA), Polyvinylidenfluorid (PVDF), Polyvinylidenchlorid (PVDC), Polybutylennaphthalat (PBN), Polyethylennaphthalat (PEN), Polyoximethylen (POM), Polyphenylensulfid (PPS), Fluorthermoplastmaterial und Kombinationen davon.

11. Kapsel nach einem der vorstehenden Ansprüche, wobei das Material auf Papierbasis wenigstens eine Bahn aus Material umfasst, das ausgewählt ist aus der Gruppe bestehend aus Papier, Cellulose, natürlichen Fasern und Kombinationen davon.

12. Kapsel nach einem der vorstehenden Ansprüche, wobei das Material auf Papierbasis wenigstens eine Sauerstoffbarriereschicht umfasst, die ausgewählt ist aus der Gruppe bestehend aus EVOH, PVDC, Polyamid, PVA, PVOH, PEN, PBN, PTFE und Kombinationen davon.

13. Kapsel nach einem der vorstehenden Ansprüche, wobei die abdichtende Abdeckung ein Laminat von einem oder mehreren Polymeren oder Papierpolymeren ist, die wenigstens eine Gasbarriereschicht umfasst, die ausgewählt ist aus der Gruppe bestehend aus EVOH, PVDC, Polyamid, PVA, PVOH, PEN/PBN, PTFE und Kombinationen davon.

14. Verfahren zum Herstellen einer Kapsel (1) nach einem der vorstehenden Ansprüche, umfassend:
a. Bilden des becherartigen Körpers (2) auf Papierbasis,
b. Anordnen des gebildeten becherartigen Körpers (2) auf Papierbasis in einer Sandwich-Spritzgießvorrichtung (14),
c. Sandwich-Spritzgießen erster und zweiter Polymere im geschmolzenen Zustand, wobei der Flansch (4) mit der Schicht (6) des zweiten Polymers nach dem Aushärten den becherartigen Körper (2) überlagert.

15. Verfahren nach Anspruch 14, wobei es ferner das Einfüllen von Inhaltsstoffen in den Hohlraum des Körpers und das Kleben der abdichtenden Abdeckung (3) auf den Flansch umfasst.

## Revendications

1. Capsule (1) pour la préparation d'une boisson dans un dispositif de préparation de boisson, comprenant un corps en forme de tasse (2), un couvercle d'étanchéité (3) pour fermer le corps en forme de tasse ; un rebord (4) pour que le couvercle produise une étanchéité dessus ; le corps en forme de tasse comprenant une paroi de cavité (5) contenant des ingrédients de boisson et le corps en forme de tasse étant formé de matériau à base de papier comprenant au moins une couche de barrière au gaz ; dans laquelle le rebord (4) est fixé de manière étanche au corps ; ladite capsule étant **caractérisée en ce que** le rebord est formé d'un premier polymère et d'un deuxième polymère ; le deuxième polymère étant une couche de barrière au gaz (6) chevauchant le corps en forme de tasse (2).

2. Capsule selon la revendication 1, dans laquelle la couche de barrière au gaz (6) constituée dudit deuxième polymère est intégrée dans le premier polymère moulé formant une enveloppe (12).

3. Capsule selon les revendications 1 ou 2, dans laquelle le rebord (4) comprend une première partie d'étanchéité (7) pour la fixation du couvercle d'étanchéité (3) et une deuxième partie d'étanchéité (8) pour la fixation du corps en forme de tasse et dans laquelle la couche de barrière au gaz s'étend de la première partie (7) à la deuxième partie (8).

4. Capsule selon la revendication 3, dans laquelle les première et deuxième parties d'étanchéité (7, 8) sont radialement et/ou axialement distantes l'une de l'autre au niveau du rebord.

5. Capsule selon la revendication 4, dans laquelle le rebord (4) comprend un premier élément annulaire (9) faisant saillie vers l'extérieur comprenant la première partie d'étanchéité (7) et un deuxième élément tubulaire ou tronconique (10) comprenant la deuxième partie d'étanchéité (8).

6. Capsule selon la revendication 5, dans laquelle la deuxième partie d'étanchéité (8) est scellée à une partie tubulaire ou tronconique (11) de forme complémentaire du corps en forme de tasse.

7. Capsule selon la revendication 3, dans laquelle les première et deuxième parties se chevauchent l'une l'autre dans la direction radiale.

8. Capsule selon la revendication 7, dans laquelle le rebord (4) comprend un élément annulaire relativement plat ou étagé (9).

9. Capsule selon l'une quelconque des revendications précédentes, dans laquelle le deuxième polymère est choisi parmi le groupe constitué d'EVOH, PVDC polyamide, PVA, PVOH, PEN/PBN, PTFE et des combinaisons de ceux-ci.

10. Capsule selon l'une quelconque des revendications précédentes, dans laquelle le premier polymère est choisi parmi le groupe constitué de polyamide (PA), polyéthylène (PE), polypropylène (PP), téréphtalate de polyéthylène (PET), alcool éthylène-vinylique (EVOH), alcool polyvinylique (PVOH ou PVA), fluorure de polyvinylidène (PVDF), chlorure de polyvinylidène (PVDC), naphtalate de polybutylène (PBN), naphtalate de polyéthylène (PEN), polyoxyméthylène (POM), sulfure de polyphénylène (PPS), un matériau thermoplastique fluoré et des combinaisons de ceux-ci.

11. Capsule selon l'une quelconque des revendications précédentes, dans laquelle le matériau à base de papier comprend au moins une feuille de matériau choisie parmi le groupe constitué de papier, cellulose, fibres naturelles et des combinaisons de ceux-ci.

12. Capsule selon l'une quelconque des revendications précédentes, dans laquelle le matériau à base de papier comprend au moins une couche de barrière à l'oxygène choisie parmi le groupe d'EVOH, PVDC, polyamide, PVA, PVOH, PEN, PBN, PTFE et des combinaisons de ceux-ci.

13. Capsule selon l'une quelconque des revendications précédentes, dans laquelle le couvercle d'étanchéité est un stratifié de polymère(s) ou de papier-polymère(s) comprenant au moins une couche de barrière au gaz choisie parmi le groupe d'EVOH, PVDC, polyamide, PVA, PVOH, PEN/PBN, PTFE et des combinaisons de ceux-ci.

14. Procédé de production d'une capsule (1) selon l'une quelconque des revendications précédentes, comprenant :
a. la formation du corps en forme de tasse à base de papier (2),
b. la mise en place du corps en forme de tasse à base de papier (2) dans un appareil de moulage par co-injection (14),
c. la co-injection de premier et deuxième polymères dans un état fondu pour former, après solidification, le rebord (4) avec la couche (6) de deuxième polymère chevauchant le corps en forme de tasse (2).

15. Procédé selon la revendication 14, où il comprend en outre le remplissage d'ingrédients dans la cavité du corps et le scellage du couvercle d'étanchéité (3) sur le rebord.
